# EUROPEAN PATENT APPLICATION

(11) **EP 1 482 697 A2**
(43) Date of publication of application: **01.12.2004**
(21) Application number: 04102327.6
(22) Date of filing: 26.05.2004
(51) Int. Cl.: H04L 12/58

(54) **Remote service provision using a chat protocol**

(30) Priority: 28.05.2003 KR 2003034030
(71) Applicant: Samsung Electronics Co., Ltd., Suwon-si, Gyeonggi-Do 442-742 (KR)
(72) Inventor: Lee, Kang-hoon 520-604 Jinsan Maeul Samsung Apt.,, Gyeonggi-do (KR)
(74) Representative: Read, Matthew Charles

(57) **Abstract**

A method and apparatus to remotely control an electronic apparatus (40) is provided. The method includes, connecting a plurality of electronic apparatuses (40) to an Internet chatting server (30); displaying types of the plurality of electronic apparatuses (40) connected with the Internet chatting server (30) on a display screen of a client computer (10) connected with the Internet chatting server (30); and transmitting a predetermined control command to a predetermined electronic apparatus selected by a first user among the types of the plurality of the electronic apparatuses (40) displayed on the display screen to the predetermined electronic apparatus (40), and controlling the predetermined electronic apparatus (40) according to the predetermined control command or generating an error message to indicate that the predetermined electronic apparatus (40) is not controlled. Therefore, the present invention allows remote control of electronic apparatuses (40) over the Internet (20), without requiring exact Internet addresses of electronic apparatuses (40) and without executing programs to drive the electronic apparatuses in a server with which the electronic apparatuses (40) are connected.

## Description

The present invention relates to a method of remotely controlling an apparatus via a network, comprising transmitting a control command to an apparatus via a network, a method of providing a service via a network, comprising receiving a control command from a remote station via a network and performing a service automatically in dependence on said command and an electronic apparatus, e.g. a printer, a multifunction peripheral or a file server, comprising a network interface, processing means and service providing means, the processing means being configured to control the service providing means to provide a service in dependence on a control command received by the network interface.

It is know to provide web interfaces to remote electronic apparatus. For example, CUPS (Common Unix Printing System) provides a web interface for remote configuration of printers and uses HTTP as the transport for print commands.

Alternatively, web interfaces may be provided by printing apparatuses or other peripherals themselves.

The WebDAV protocol provides filesystem-like access to documents on a remote machine using HTTP as the transport protocol.

A method of remotely controlling an apparatus via a network, according to the present invention, is characterised in that a chat protocol is used as the transport for said control command.

The chat protocol is preferably the Internet Relay Chat protocol but may be another protocol such as Jabber.

The method may involve registering with a chat protocol server and sending said command via said server after registration.

The method may also include receiving apparatus identifying information from said server and transmitting said command to the apparatus identified by said identifying information.

A method of providing a service, e.g. printing, faxing or file serving, via a network, according to the present invention is characterised in that a chat protocol is used as the transport for said control command.

The chat protocol is preferably the Internet Relay Chat protocol but may be another protocol such as Jabber.

The method may involve registering with a chat protocol server and sending said command via said server after registration.

The method may also include transmitting an availability message to the chat server after registration and before receiving said command. The availability message can notify remote devices that the service provider is available for providing its service and/or what services are available from it.

An apparatus, according to the present invention, is characterised in that the processing means is configured for extracting said control command from a chat protocol signal received by the network interface.

Preferably, the processing means is configured for extracting said control command from an Internet Relay Chat protocol signal received by the network interface. However, another chat protocol, for example Jabber, may be used.

Preferably, the processing means is configured for sending registration signals to a chat server using the network interface.

Preferably, the processing means is configured for sending availability signals to a chat server using the network interface.

According to the present invention, there is also provided, a computer having a network interface and programmed to perform a method of remotely controlling an electronic apparatus according to the present invention.

According to the present invention, there is also provided a signal carrying program codes for controlling a computer for programming a computer to produce a computer according to the present invention.

According to the present invention, there is also provided a data carrier having a signal according to the present invention recorded therein or thereon.

The use of a chat protocol means that the apparatuses providing the services do not need to be connected to or part of the server, which the client communicates with, as in the case of CUPS and WebDAV. Thus, a service provider apparatus can make itself available via a chat server and there is no need for the server to be modified to support the availability of the new service.

Embodiments of the present invention will now be described, by way of example, with reference to the accompanying drawings, in which:
Figure 1 illustrates a network environment;
Figure 2 is a flowchart to illustrate a method of remotely controlling an electronic apparatus according to the present invention;
Figure 3 is a flowchart illustrating operation 100 of Figure 2;
Figure 4 is a flowchart to illustrating operation 104 of Figure 2;
Figure 5 is a flowchart to illustrating operation 104 of Figure 2;
Figure 6 is a block diagram of an apparatus for remotely controlling an electronic apparatus according to the present invention;
Figure 7 is a block diagram of the server connection processor of Figure 6; and
Figure 8 is a block diagram of the control command processor of Figure 6.

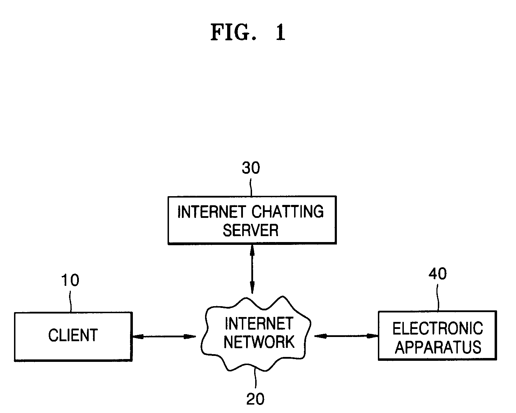

Referring to Figure 1, a network environment includes: a client computer 10, an Internet network 20, an Internet relay chat (IRC) server 30 and an electronic apparatus 40. The client computer 10 may be a desktop computer, a notebook computer, a personal digital assistant (PDA), etc. The IRC SERVER 30 is a server that supports multiple connections. A plurality of client computers can access one IRC server and communicate to each other using text in real time. The electronic apparatus 40 is a printer or other device for providing services to the client 10.

As shown in Figure 1, a network environment is formed, in which the client computer 10 can access the electronic apparatus 40, because the electronic apparatus 40 is connected with the IRC server 30 via the Internet network 20.

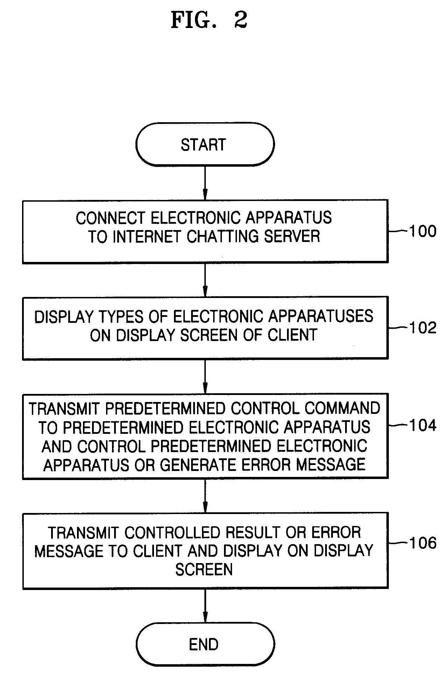

Referring to Figure 2, a method of remotely controlling an electronic apparatus comprises operations 100 through 106, which involve the transmission of control commands to an electronic apparatus 40, which can communicate via the IRC server 30.

First, the electronic apparatus 40 connects to the IRC server 30 in operation 100.

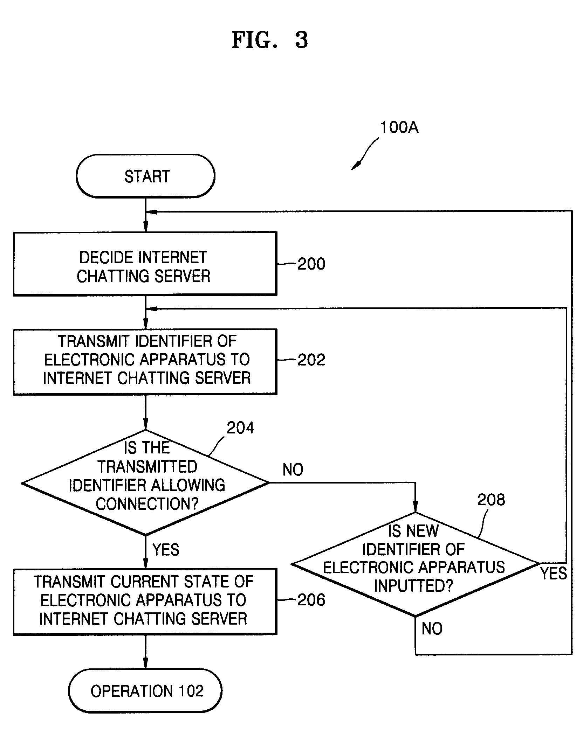

Referring to Figure 3, an example 100A of operation 100 of Figure 2, includes operations 200 through 208, which involve the transmission of an identifier of the electronic apparatus 40 to the IRC server 30 and transmission of the current status of the electronic apparatus 40 to the IRC server 30, if the IRC server 30 allows access in response to reception of the identifier.

First, the IRC server 30 is selected in operation 200. Several well-known IRC servers may be selected in advance and registered in the electronic apparatus 40. The IRC server 30 that the electronic apparatus 40 will access is a server that includes identifier information, etc., of the electronic apparatus 40 in advance. Accordingly, when a user (referred to as the second user) selects an IRC server 30 through a display screen of the electronic apparatus 40, the selected IRC server 30 is set as the IRC server to be used by the electronic apparatus 40.

After operation 200, the identifier of the electronic apparatus 40, input by the second user is transmitted to the set IRC server 30 in operation 202. The identifier of the electronic apparatus 40 includes an identification (ID) and a password.

After operation 202, it is determined whether the identifier of the electronic apparatus 40, transmitted to the IRC server 30, is an identifier that allows connection between the IRC server 30 and the electronic apparatus 40, in operation 204. The IRC server 30 includes registration information of the electronic apparatus 40. Accordingly, by comparing the identifier of the electronic apparatus, included in the registration information, with an identifier transmitted from the electronic apparatus 40, it is determined whether the identifiers are the same.

If it has been determined that the transmitted identifier is an identifier that allows connection between the IRC server 30 and the electronic apparatus 40, the current state of the electronic apparatus 40 is transmitted to the IRC server 30 in operation 206. The current state of the electronic apparatus 40 may be "standby" or "operating" to indicate accessibility by a client computer and performance of a predetermined operation. The IRC server 30 transmits the received current state of the electronic apparatus 40 to the client computer 10.

On the other hand, if it has been determined that the transmitted identifier is not an identifier that allows connection between the IRC server 30 and the electronic apparatus 40, it is determined whether a new identifier for the electronic apparatus 40 is received from the second user, at operation 208. If a new identifier for the electronic apparatus 40 has been received from the second user, operation 202 is executed. If no new identifier of the electronic apparatus 40 has been received from the second user, operation 200 executed.

After operation 100, the type of the electronic apparatus 40, connected to the IRC server 30, is displayed on the display screen of the client computer 10, which is also connected to the IRC server 30, in operation 102. The client computer 10 accesses the IRC server 30, and when the client computer 10 accesses the IRC server 30, the types of electronic apparatuses that are in communication with the IRC server 30 and a list of different client computers that are in communication with the IRC server 30 are displayed on the display screen of the client computer.

After operation 102, a predetermined control command for an electronic apparatus 40, selected by a user (referred to as the first user), from among the plurality of electronic apparatuses, displayed on the display screen, is transmitted to the selected electronic apparatus 40. The selected electronic apparatus 40 that receives the control command operates according to the control command. If the electronic apparatus cannot be controlled, an error message to indicate that the electronic apparatus cannot be controlled is generated in operation 104.

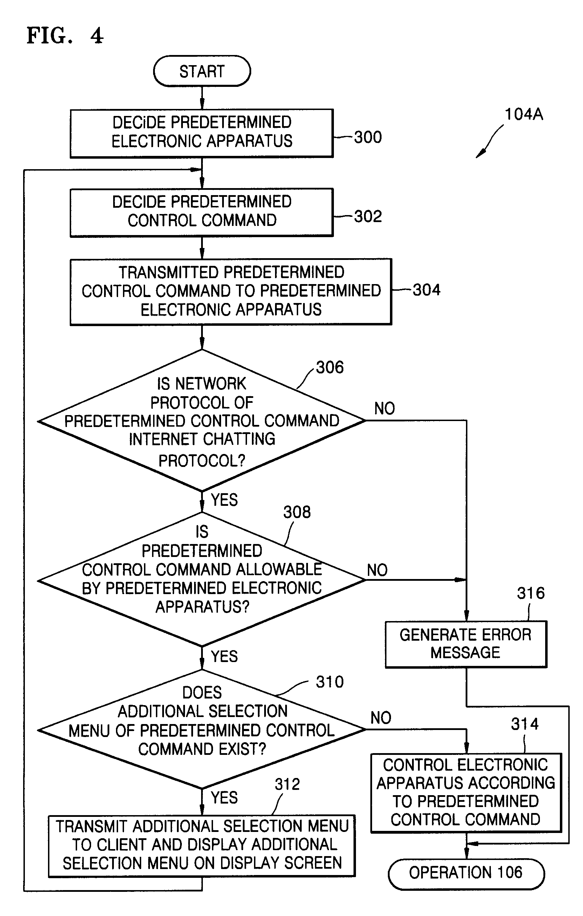

Referring to Figure 4, an example 104A of operation 104 of Figure 2 includes operations 300 through 316 in which the electronic apparatus 40 is controlled or an error message is generated, on the basis of whether a control command, selected from a menu of control commands with an interactive message format, is a network protocol or control command allowable by the predetermined electronic apparatus 40.

First, the electronic apparatus 40 is selected by the first user in operation 300. When a predetermined electronic apparatus 40, among a plurality of electronic apparatuses displayed on the display screen, is selected by the first user, the selected electronic apparatus 40 is determined to be the electronic apparatus 40 to be controlled by the client computer 10. A conversation window, in which a control command can be input, is displayed on the display screen of the client computer 10.

After operation 300, a control command, to control the selected electronic apparatus 40, is determined in operation 302. The control command includes a control command that is initially transmitted to the electronic apparatus 40 and a control command that is additionally transmitted. The initial control command is a control command that requests the control command selection menu, including additional control commands for the electronic apparatus 40. The additional control commands are commands selected from the command selection menu. When a control command is selected by the first user, the control command is set as the control command for controlling the electronic apparatus 40.

After operation 302, the control command is transmitted to the electronic apparatus in operation 304.

After operation 304, it is determined whether the transmitted control command is an IRC protocol message, in operation 306. The IRC protocol as a protocol to allow chatting on the Internet and is based on a client/server model. It implemented over the TCP/IP protocol. Accordingly, it is determined whether the control command has been transmitted by the IRC protocol.

If it is determined that the network protocol of the transmitted control command is the IRC protocol, it is determined, in operation 308, whether the transmitted control command is a control command recognised by the electronic apparatus 40. The electronic apparatus 40 includes control command data required for the electronic apparatus's own control. Accordingly, the electronic apparatus 40 determines whether the predetermined control command transmitted from the client computer 10 is among the control command data, so that the electronic apparatus 40 determines whether the transmitted control command is a control command recognised by the electronic apparatus 40.

If it is determined that the transmitted control command is a control command recognised by the selected electronic apparatus, it is determined, in operation 310, whether there is an additional selection menu for the control command. The control command may be a directly implementable control command which directly controls the electronic apparatus 40 or a control command that requests an additional selection menu for providing command parameters or selection of a subgroup member of the control command. The additional selection menu may include various selection items relating to additional control command elements.

When an additional selection menu, relating to the command exists, the additional selection menu is transmitted to the client computer 10 and displayed on the display screen of the client computer 10 in operation 312, and then operation proceeds to operation 302.

On the other hand, when no additional selection menu, related to the control command exists, the electronic apparatus 40 is controlled according to the control command in operation 314. When no additional selection menu related to the control command exists, the predetermined control command is a control command for directly controlling the electronic apparatus 40. Accordingly, the electronic apparatus 40 is controlled according to the control command.

If it is determined that the network protocol of the transmitted control command is not the IRC protocol or that the transmitted control command is not a control command recognised by the predetermined electronic apparatus 40, an error message is generated in operation 316. The error message indicates that the electronic apparatus 40 cannot be controlled by the transmitted control command.

Figure 4 illustrates a method according to which the electronic apparatus 40 is controlled on the basis of a control command with an interactive message format. Hereinafter, methods of controlling the electronic apparatus 40, according to a control command selected in a selection menu, including control commands, each with the interactive message format, according to the present invention will be described.

As an example, a method in which the electronic apparatus 40 is a printer or multifunction device and performs a printing operation will be described.

First, when an icon or a letter to indicate a printer or a multifunctional device among the types of the electronic apparatuses connected with the IRC server 30 is selected by a user, a conversation window, in which a control command to be transmitted to the printer or the multifunctional device, is input is displayed on the display screen of the client computer 10.

For example, when the control command "Help" is input by the user, the "Help" control command is transmitted to the printer or multifunctional device through the IRC server 30.

When the printer or multifunctional device receives the "Help" control command, as shown in Figure 4, the printer or multifunctional device determines whether the "Help" control command is an IRC protocol message and determines whether the "Help" control command is a control command recognised by the printer or the multifunctional device. Since the printer or multifunctional device stores control command data, the printer or multifunctional device determines whether the control command, received from the client computer 10, is among the control command data stored in the printer or the multifunctional device.

The control command data stored in the printer or the multifunctional device, for example, includes "Help", "Get", "Set", and "Do" as control command data commonly used in all electronic apparatuses, and "Printer", "Connect", "Display", and "Distribute" as control command data specifically used in a printer or a multifunctional device. The control command data "Help" is a control command to indicate 'transmit a list of control commands recognised by the electronic apparatus 40 to the client computer 10', "Get" is a control command to indicate 'transmit characteristics of or data about the electronic apparatus to the client computer 10' and "Set" is a control command to indicate 'set a parameter of the electronic apparatus as specified and confirm". Furthermore, "Print" is a control command to indicate 'print a file', "Connect" is a control command to indicate 'connect a printer or a multifunctional device to a different electronic apparatus', "Display" is a control command to indicate 'display a menu of a printer or a multifunctional device', and "Distribute" is a control command to indicate 'transmit a file from a printer or a multifunctional device to a different electronic apparatus'. These control commands may be different according to the type of the electronic apparatus and also devices required to recognize and execute the control commands may be different according to the type of the electronic apparatus.

The control commands may be transmitted in the form of a letter or in the form of a selection type menu. That is, the selection type menu is, for example, "1. Get, 2. Set, 3. Display". The electronic apparatus 40 transmits the selection type menu to the client computer 10 so that a user selects from the selections numbered 1, 2, and 3.

The printer or the multifunctional device provides "1. main menu, 2. management menu, 3. help" as the additional selection menu related to the "Help" control command to the client computer 10.

The transmitted additional selection menu, "1. main menu, 2. management menu, 3. help" is displayed on the display screen of the client computer 10.

"1. main menu" of the additional selection menu is selected by the user, the selected control command is transmitted to the printer or the multifunctional device.

When the printer or the multifunctional device receives the control command of "1. main menu", as shown in Figure 4, it is determined whether the network protocol of the control command is the IRC protocol and whether the control command of "1. main menu" is a control command recognised by the printer or the multifunctional device.

The printer or the multifunctional device detects "1. print a file, 2. search for a file, 3. transmit a fax, 4. see a list of received faxes", etc., as an additional selection menu of the control command of "1. main menu" and transmits the detected result to the client computer 10.

The transmitted additional selection menu, "1. print a file, 2. search for a file, 3. transmit a fax, 4. see a list of received faxes" are displayed on the display screen of the client computer 10.

When a control command corresponding to "1. print a file" in the additional selection menu is selected by a user, the corresponding selected control command is again transmitted to the printer or the multifunctional device. The file to be printed is also transmitted to the printer or the multifunctional device.

When the printer or the multifunctional device receives the control command, as shown in Figure 4, it is determined whether the protocol is the IRC protocol and whether the control command of "1. print a file" is a control command recognised by the printer or the multifunctional device.

The printer or the multifunctional device prints the transmitted file according to the control command of "1. print a file".

After the transmitted file is completely printed, a message to indicate that the transmitted file is printed is displayed on the display screen of the client computer 10.

When printing the file, a control command that requires that a printer or a multifunctional device receive a file from a data server and print the file is generated or a control command that requires that a plurality of printers or multifunctional devices print the same file is generated.

A method of calling up a file from a document server will now be described.

First, when an icon or text, representing a document server among the types of the electronic apparatuses connected with the IRC server 30, is selected by the user, a conversation window, in which a control command to be transmitted to the document server is input, is displayed on the display screen of the client computer 10.

When a control command "Help" is input by the user, the "Help" control command is transmitted to the document server through the IRC server 30.

When the document server receives the control command "Help", as shown in Figure 4, it is determined whether the network protocol of the control command "Help" is the IRC protocol and whether the control command of "Help" is a control command allowable by the document server. Since the document server stores control command data, the document server determines whether a control command input from the client computer 10 is one among the control command data stored in the document server. The control command data stored in the document server includes, for example, "Help", "Get", "Set", and "Do" as control command data commonly used in all electronic apparatuses and control command data specifically used in the document server.

The document server detects "1. main menu, 2. management menu, 3. help", etc. as the additional selection menu for the control command of "Help", and transmits it to the client computer 10.

The transmitted additional selection menu, "1. main menu, 2. management menu, 3. help", etc. is displayed on the display screen of the client computer 10.

When a control command corresponding to "1. main menu" of the additional selection menu is selected by the user, the selected control command is transmitted to the document server.

When the document server receives the control command "1. main menu", as shown in Figure 4, it is determined whether the control command of "1. main menu" has been sent using the IRC protocol and whether the control command of "1. main menu" is a control command allowable by the document server.

The document server detects "1. see a list of files, 2. see a list of servers", etc., as an additional selection menu of "1. main menu", and transmits the detected result to the client computer 10.

The transmitted additional selection menu "1. see a list of files, 2. see a list of servers", etc. are displayed on the display screen of the client computer 10.

When a control command corresponding to "1. see a list of files" in the additional selection menu is selected by a user, the selected control command is again transmitted to the document server.

When the document server receives the control command of "1. see a list of files', as shown in Figure 4, it is determined whether the control command of "1. see a list of files" is sent using the IRC protocol and whether the control command of "1. see a list of files" is a control command recognised by the document server.

The document server detects a list stored in the document server according to the control command of "1. see a list of files" and transmits the list to the client computer 10.

The transmitted list of files is displayed on the display screen of the client computer 10.

When a file among the displayed list of files is selected by a user and a control command "Get" for the selected file is decided, the "Get" control command for the selected file is again transmitted to the document server.

When the document server receives the "Get" control command for the selected file, as shown in Figure 4, it is determined whether the network protocol of the control command of "Get" is the IRC protocol and whether the control command of "Get" is a control command recognised by the document server.

The document server transmits the selected file to the client computer 10 according to the "Get" control command for the selected file.

Then, a message to indicate that the selected file has been transmitted to the client computer 10 is displayed on the display screen of the client computer 10.

The client computer 10 can call up a file, scanned by a multifunctional device, etc., or a file transmitted through a facsimile using the same method as that used in the document server, and executes the "see a list" option to display the file.

The client computer 10 is informed of the current state of the electronic apparatus 40. When the electronic apparatus 40 is connected to an IRC server 30, the current state of the electronic apparatus 40 at the connection time is transmitted to the IRC server 30, and the current state of the electronic apparatus transmitted to the IRC server 30 is displayed on the display screen of the client computer 10. The current state of the electronic apparatus 40 is periodically displayed on the display screen of the client computer 10. When a user requests a detailed current state of the electronic apparatus 40, the detailed current state of the electronic apparatus 40 is displayed on the display screen of the client computer 10.

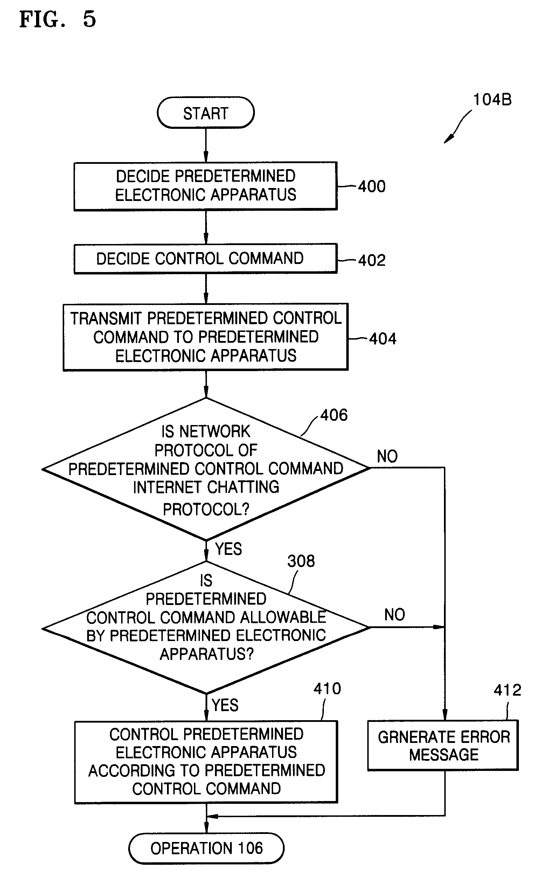

Figure 5 is a flowchart to illustrate an example 104A of operation 104 of Figure 2, where the operation comprises operations 400 through 412 that control an electronic apparatus 40 or generate an error message according to whether a control command selected in a menu window of control commands is a network protocol or control command recognised by an electronic apparatus 40.

First, the user selects an electronic apparatus 40 in operation 400. When an electronic apparatus 40 has been selected, a menu window of control commands, output from the electronic apparatus 40, is transmitted to the client computer 10 and is displayed on the display screen of the client computer 10. In contrast to the above-described selection menu with the interactive message format, the menu window of the control commands allows a first user to select control commands at the same time. This is different from the aspect of the present invention shown in Figure 4 that provides the control command with an interactive format because control commands selected by the first user are transmitted to the electronic apparatus 40 at the same time.

After operation 400, a control command for controlling the electronic apparatus 40 is determined in operation 402. A control command, which the first user selects in the menu window of control commands, displayed on the display screen of the client computer 10, is determined to be a control command for controlling the predetermined electronic apparatus 40.

After operation 402, the predetermined control command is transmitted to the electronic apparatus 40 in operation 404.

After operation 404, it is determined whether the network protocol of the transmitted control command is the IRC protocol in operation 406.

If it is determined that the network protocol of the transmitted control command is the IRC protocol, it is determined, in operation 408, whether the transmitted control command is a control command recognised by the electronic apparatus 40.

If it is determined that the transmitted control command is a control command recognised by the electronic apparatus, the electronic apparatus 40 is controlled according to the control command in operation 410.

However, if it is determined that the network protocol of the transmitted control command is not the IRC protocol or that the transmitted control command is not the control command recognised by the predetermined electronic apparatus 40, an error message is generated in operation 412.

After operation 412, a result of the command or a generated error message is transmitted from the electronic apparatus 40 to the client computer 10 and is displayed on the display screen of the client computer 10 in operation 106. That is, a result of the electronic apparatus being controlled by the control command or an error message to indicate that the electronic apparatus cannot be controlled by the control command is displayed on the display screen of the client computer 10.

Hereinafter, a remote controller of the electronic apparatus according to the present invention will be described.

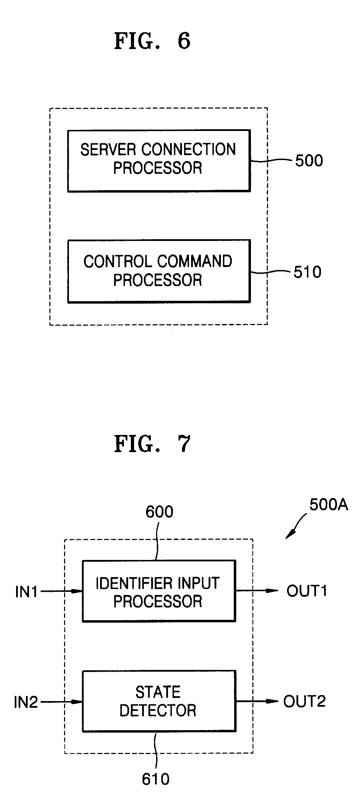

Referring to Figure 6, the electronic apparatus includes a server connection processor 500 and a control command processor 510.

The server connection processor 500 connects an electronic apparatus 40 to an IRC server 30.

Referring to Figure 7, the server connection processor 500 of Figure 6 includes an identifier input processor 600 and a state detector 610.

The identifier input processor 600 transmits an identifier of the electronic apparatus 40, received from a second user, to an IRC server 30. The identifier input processor 600 transmits an identifier including an ID and a password of the electronic apparatus 40, received from the second user, through an input terminal IN1 to an IRC server 30 through an output terminal OUT1. Because the IRC server 30 stores registration information of the electronic apparatus 40, the IRC server 30 compares the identifiers of electronic apparatuses, included in the registration information, with the identifier transmitted from the electronic apparatus 40.

The state detector 610 detects the current state of the electronic apparatus 40 and transmits the detection result to the IRC server 30. The state detector 610 receives the identification comparison result from the IRC server 30 through an input terminal IN2. The state detector 610 detects the current state of the electronic apparatus 40 in dependence on the comparison result and transmits the detected result to the IRC server 30 through an output terminal OUT2.

The control command processor 510 controls the electronic apparatus or generates an error message according to the control command transmitted from the client computer 10.

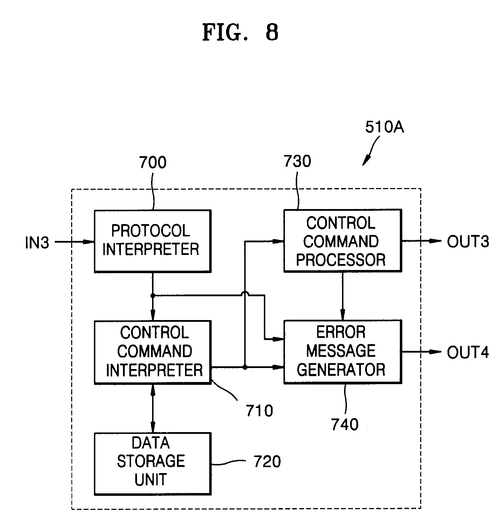

Referring to Figure 8, the control command processor 510 of Figure 6 includes a protocol interpreter 700, a control command interpreter 710, a data storage unit 720, a control command processor 730, and an error message generator 740.

The protocol interpreter 700 determines whether the network protocol of a transmitted control command is the IRC protocol. The determined result, output from the protocol interpreter 700, is categorized into a case where the network protocol of the control command is the IRC protocol and a case where the network protocol of the control command is not the IRC protocol. The protocol interpreter 700 determines whether a network protocol of a control command, received through an input terminal IN3, is the IRC protocol and outputs the determined result to the control command interpreter 710 and the error message generator 740.

The control command interpreter 710 determines whether the transmitted control command is a control command recognised by the electronic apparatus 40. The control command interpreter 710 determines whether the transmitted control command is a control command recognised by the electronic apparatus in response to the determined result received from the protocol interpreter 700, and outputs the determined result to the control command processor 730 and the error message generator 740. To determine whether the transmitted control command is a control command recognised by the electronic apparatus 40, the control command interpreter 710 checks the data storage unit 720 to determine whether data corresponding to the transmitted control command exists therein, and outputs a message to indicate that the transmitted control command is a control command allowable by the electronic apparatus 40 when the required control command data exists.

The data storage unit 720 stores control command data, including predetermined control commands, and a list of electronic apparatuses connected with the IRC server 30. The data storage unit 720 provides control command data in response to a request for control command data received from the control command interpreter 710. The electronic apparatus 40 is connected with different electronic apparatuses and executes the control command through signal communication with the different electronic apparatuses. Accordingly, the data storage unit 720 stores registration information of different electronic apparatuses.

The control command processor 730 controls the electronic apparatus 40 according to a control command or detects an additional selection menu related to the control command. The control command processor 730 controls the electronic apparatus 40 according to the control command in response to the determined result output from the control command interpreter 710 or detects an additional selection menu of the control command, and outputs the result through an output terminal OUT3. The additional selection menu of the control command is detected in an interactive message format when the electronic apparatus 40 is controlled by the control command. The result of the controlled operation of the electronic apparatus 40, output through the output terminal OUT3, is transmitted to the client computer 10, and is displayed on the display screen of the client computer 10.

The error message generator 740 generates error messages in response to the determination results output from the protocol interpreter 700 or in response to the determination result output from the control command interpreter 710. The error messages generated by the error message generator 740 indicate that the electronic apparatus 40 cannot be controlled by a received control command. The error message generator 740 outputs the generated error messages through an output terminal OUT4. The error messages output through the output terminal OUT4 are transmitted to the client computer 10 and is displayed on the display screen of the client computer 10.

As described above, according to the present invention, it is possible to remotely control electronic apparatuses over the Internet without requiring exact Internet addresses of the electronic apparatuses and without executing programs to drive the electronic apparatuses in a server to which the electronic apparatuses are connected.

## Claims

1. A method of remotely controlling an apparatus (40) via a network (20), the method comprising transmitting a control command to an apparatus (40) via a network (20) and being **characterised in that** a chat protocol is used as the transport for said control command.

2. A method according to claim 1, wherein the chat protocol is the Internet Relay Chat protocol.

3. A method according to claim 1 or 2, comprising registering with a chat protocol server (30) and sending said command via said server (30) after registration.

4. A method according to claim 3, including receiving apparatus identifying information from said server (30) and transmitting said command to the apparatus (40) identified by said identifying information.

5. A method of providing a service via a network (20), the method comprising receiving a control command from a remote station (10) via a network (20) and performing a service automatically in dependence on said command and being **characterised in that** a chat protocol is used as the transport for said control command.

6. A method according to claim 5, wherein the chat protocol is the Internet Relay Chat protocol.

7. A method according to claim 5 or 6, including registering with a chat server (30) before receiving said command.

8. A method according to claim 7, including transmitting an availability message to the chat server (30) after registration and before receiving said command.

9. An electronic apparatus comprising a network interface, processing means and service providing means, the processing means being configured to control the service providing means to provide a service in dependence on a control command received by the network interface, **characterised in that** the processing means is configured for extracting said control command from a chat protocol signal received by the network interface.

10. An apparatus according to claim 9, wherein the processing means is configured for extracting said control command from an Internet Relay Chat protocol signal received by the network interface.

11. An apparatus according to claim 9 or 10, wherein the processing means is configured for sending registration signals to a chat server using the network interface.

12. An apparatus according to claim 9, 10 or 11, wherein the processing means is configured for sending availability signals to a chat server using the network interface.

13. A printer according to any one of claims 9 to 12.

14. A multifunction peripheral according to any one of claims 9 to 12.

15. A file server according to any one of claims 9 to 12.

16. A computer having a network interface and programmed to perform a method according to any one of claims 1 to 4.

17. A signal carrying program codes for controlling a computer for programming a computer to produce a computer according to claim 16.

18. A data carrier having a signal according to claim 17 recorded therein or thereon.

19. method to remotely control electronic apparatuses of a network, the method comprising:
connecting the electronic apparatuses to an Internet chatting server;
displaying types of the electronic apparatuses connected with the Internet chatting server on a display screen of a client computer connected with the Internet chatting server; and
transmitting a predetermined control command of a selected one of the electronic apparatuses selected by a first user among the types of the electronic apparatuses displayed on the display screen to the selected electronic apparatus, and controlling the selected electronic apparatus according to the predetermined control command or generating an error message indicating that the selected electronic apparatus is not controlled.

20. The method according to claim 19, wherein the connecting of the electronic apparatuses to the Internet chatting server comprises:
determining the Internet chatting server;
transmitting an identifier of the selected electronic apparatus inputted by a second user to the determined Internet chatting server;
determining whether the transmitted identifier is an identifier that allows a connection between the Internet chatting server and the selected electronic apparatus;
transmitting a current state of the selected electronic apparatus from the electronic apparatus to the Internet chatting server upon determining that the transmitted identifier is the identifier that allows the connection between the Internet chatting server and the electronic apparatus; and
determining whether a new identifier of the selected electronic apparatus is input by the second user upon determining that the transmitted identifier is not the identifier that allows the connection between the Internet chatting server and the selected electronic apparatus.

21. The method according to claim 19, wherein transmitting of the predetermined control command of the selected electronic apparatus comprises:
determining the selected electronic apparatus; determining a predetermined control command to control the selected electronic apparatus;
transmitting the predetermined control command to the selected electronic apparatus;
determining whether a network protocol of the transmitted control command is an Internet chatting protocol;
determining whether the transmitted control command is a control command allowable by the selected electronic apparatus upon determining that the network protocol of the transmitted control command is the Internet chatting protocol;
determining whether an additional selection menu of the predetermined control command exists upon determining that the transmitted control command is the control command allowable by the selected electronic apparatus;
transmitting the additional selection menu to the client computer, displaying the additional selection menu on the display screen, and determining a predetermined control command to control the selected electronic apparatus upon determining that the additional selection menu of the predetermined control command exists;
controlling the selected electronic apparatus according to the predetermined control command upon determining that the additional selection menu of the predetermined control command does not exist; and
generating an error message upon determining that the network protocol of the transmitted control command is not the Internet chatting protocol or that the transmitted control command is not the control command allowable by the selected electronic apparatus.

22. The method according to claim 19, wherein transmitting of the predetermined control command of the selected electronic apparatus comprises:
determining the selected electronic apparatus; determining the predetermined control command to control the selected electronic apparatus;
transmitting the predetermined control command to the selected electronic apparatus;
determining whether a network protocol of the transmitted control command is an Internet chatting protocol;
determining whether the transmitted control command is a control command allowable by the selected electronic apparatus upon determining that the network protocol of the transmitted control command is the Internet chatting protocol;
controlling the selected electronic apparatus according to the predetermined control command upon determining that the transmitted control command is the control command allowable by the selected electronic apparatus; and
generating an error message upon determining that the network protocol of the transmitted control command is not the Internet chatting protocol or that the transmitted control command is not the control command allowable by the selected electronic apparatus.

23. The method according to claim 19, further comprising:
transmitting a controlled result or the generated error message from the selected electronic apparatus to the client computer and displaying the controlled result or the generated error message on the display screen of the client computer upon transmitting the predetermined control command for the selected electronic apparatus .

24. The method according to claim 19, wherein the predetermined control command is to print a file, to call up a file, or to confirm a state of the selected electronic apparatus.

25. An apparatus to remotely control an electronic apparatus connected with a client computer that is connected with an Internet chatting server, comprising:
a server connection processor to connect the electronic apparatus to the Internet chatting server; and
a control command processor to control the electronic apparatus or generate an error message according to a control command transmitted from the client computer.

26. The apparatus according to claim 25, wherein the server connection processor comprises:
an identifier input processor to transmit an identifier of the electronic apparatus received from a user to the Internet chatting server; and
a state detector to detect a current state of the electronic apparatus and transmit the detected result to the Internet chatting server.

27. The apparatus according to claim 25, wherein the control command processor comprises:
a protocol interpreter to determine whether a network protocol of the transmitted control command is an Internet chatting protocol;
a data storage unit to store control command data including a predetermined control command and a list of different electronic apparatuses connected with the Internet chatting server;
a control command interpreter to determine whether the transmitted control command is a control command allowable by the electronic apparatus;
a control command processor to control the electronic apparatus according to the predetermined control command or to detect an additional selection menu of the predetermined control command; and
an error message generator to generate the error message in response to a determined result output from the protocol interpreter and a determined result output from the control command interpreter.

28. The method according to claim 20, wherein the identifier of the predetermined electronic apparatus is registered in the Internet chatting server, and the transmitted identifier of the predetermined electronic apparatus is compared with the registered identifier to determine whether the transmitted identifier is an identifier that allows a connection between the Internet chatting server and the predetermined electronic apparatus.

29. The method according to claim 20, wherein the current state of the electronic apparatus is periodically displayed on the display screen of the client computer.

30. The apparatus according to claim 26, wherein the Internet chatting server stores registration information of the electronic apparatus, and compares the identifier of the electronic apparatus received from the user with the registration information.

31. A method to remotely control electronic apparatuses of a network, comprising:
displaying types of the electronic apparatuses connected with the network on a display screen of a client computer; and
transmitting a predetermined control command of a selected one of the electronic apparatuses to the selected electronic apparatus, and controlling the selected electronic apparatus according to the predetermined control command or generating an error message to indicate that the selected electronic apparatus is not controlled.

32. A remote control apparatus to remotely control electronic apparatuses that are connected with a network, comprising:
an identifier input processor to transmit an identifier of a selected electronic apparatus via the network; and
a control command processor to control the selected electronic apparatus, and to generate an error message according to the identifier transmitted.

33. The remote control apparatus according to claim 32, wherein the selected electronic apparatus stores control command data, and the selected electronic apparatus determines whether the transmitted identifier is the control command data stored in the selected electronic apparatus.

34. The remote control apparatus according to claim 32, wherein the error message is generated upon determining that the transmitted identifier is not the control command data stored in the selected electronic apparatus.

35. The remote control apparatus according to claim 32, further comprising: a state detector to detect a current state of the selected electronic apparatus and transmit the detected state via the network.

36. The remote control apparatus according to claim 32, wherein the identifier of the electronic apparatus includes identification and password information.

37. A method to remotely control electronic apparatuses of a network, comprising:
transmitting a predetermined control command of a selected electronic apparatus to the selected electronic apparatus via the network; and
controlling the selected electronic apparatus according to the predetermined control command or generating an error message to indicate that the selected electronic apparatus is not controlled.

38. An apparatus to remotely control an electronic apparatus connected with an Internet chatting server, comprising:
a control command processor to control the electronic apparatus, wherein the control command processor controls the electronic apparatus without using an exact Internet address of the electronic apparatus, and without executing programs to drive the electronic apparatus.
